(19) Europäisches Patentamt
European Patent Office
Office européen des brevets

(11) **EP 1 582 380 B1**

(12) **EUROPEAN PATENT SPECIFICATION**

(45) Date of publication and mention
of the grant of the patent:
**08.10.2008 Bulletin 2008/41**

(51) Int Cl.:
***B60C 23/06*** *(2006.01)*

(21) Application number: **05004353.8**

(22) Date of filing: **28.02.2005**

(54) **Tire deflation warning system**

Reifendruckverlust Warnanlage

Système avertisseur de la perte de pression d'un pneumatique

(84) Designated Contracting States:
**DE FR GB**

(30) Priority: **31.03.2004 JP 2004107441**

(43) Date of publication of application:
**05.10.2005 Bulletin 2005/40**

(73) Proprietor: **SUMITOMO RUBBER INDUSTRIES LIMITED**
**Kobe-shi,**
**Hyogo-ken (JP)**

(72) Inventors:
• **Oshiro, Yuji**
**Kobe-shi**
**Hyogo-ken (JP)**

• **Miyamoto, Kazuyoshi**
**Kobe-shi**
**Hyogo-ken (JP)**

(74) Representative: **Manitz, Finsterwald & Partner GbR**
**Postfach 31 02 20**
**80102 München (DE)**

(56) References cited:
**EP-A- 1 284 205**       **EP-A- 1 352 765**
**EP-A- 1 361 081**       **EP-A1- 1 332 895**
**EP-A2- 0 832 767**      **US-A1- 2002 053 971**

**Description**

The present invention relates to a system for issuing a warning through detecting a deflated tire on vehicles such as passenger cars and trucks.

According to algorithms which determine a position of a tire in low air pressure, a determination is made by comparing a difference between 1 on wheel speed ratio of left and right wheels of respective front wheel and rear wheel with a threshold value.

Formulas, which are employed by a tire deflation warning system (DWS), are shown as follows:

Vfr is wheel speed of a front right tire, Vfl is wheel speed of a front left tire, Vrr is wheel speed of a rear right tire and Vrl is wheel speed of a rear left tire.

Three formulas are defined as follows:

$$Rf = 1 - Vfr/Vfl$$

$$Rr = 1 - Vrr/Vrl$$

$$Rfrlp = Rf - Rr$$

For example, it can be determined that the front left tire is likely to be deflated when above-mentioned three values being defined are as follows:

Absolute value of Rfrlp > Threshold value of Rfrlp
Rf > Threshold value of Rf
Absolute value of Rr < Threshold value of Rr

Similarly, it can be determined that the front right tire is likely to be deflated in the following case.

Absolute value of Rfrlp > Threshold value of Rfrlp
Rf > -1 x Threshold value of Rf
Absolute value of Rr < Threshold value of Rr

For example when -30 % is considered to be in a deflation state, the above-mentioned three threshold values are decided in such a manner that determination can be certainly made within a speed range by referring to the three values, Rf, Rr and Rfrlp, with respective states in which front wheel is -30 % and rear wheel is -30 %.

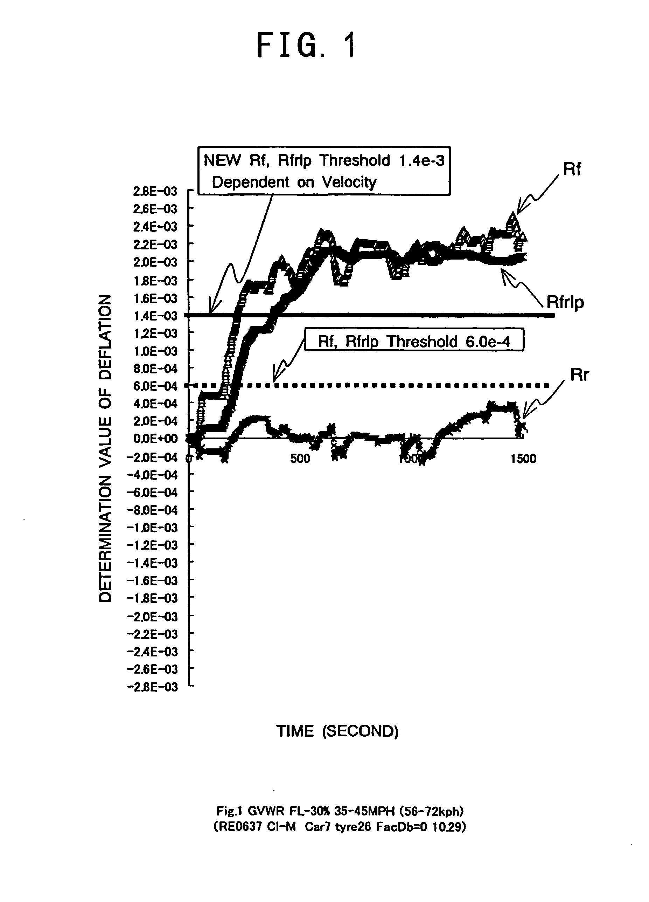

For example, it is assumed that determination is certainly made within a range of speed up to 104 km/h for a vehicle, BUICK RENDEZVOUS CXL being equipped with Goodyear Fortera P225/60R17. Graphs (Figs. 1, 2, 3 and 4) indicate the above-mentioned three values for low velocity travel (56 to 72 km/h) and high velocity travel (104 km/h) at the respective states, the 30 % deflation of the front left tire and 30 % deflation of the rear right tire with standard load. From those graphs, threshold values can be decided as follows:

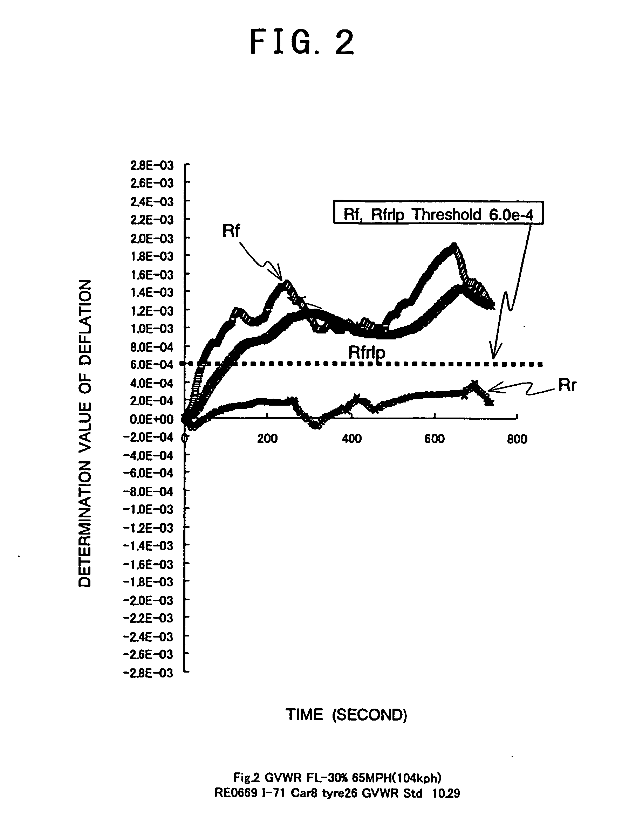

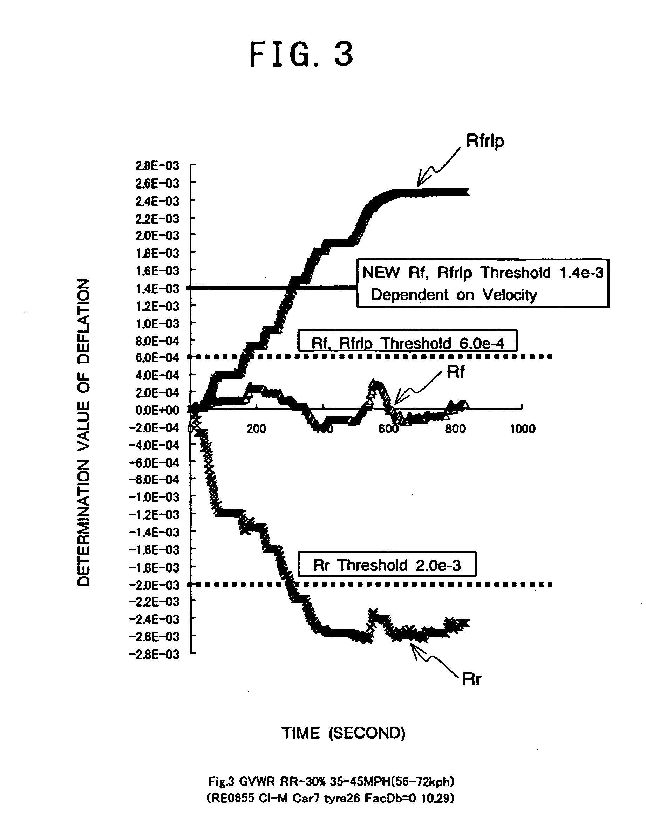

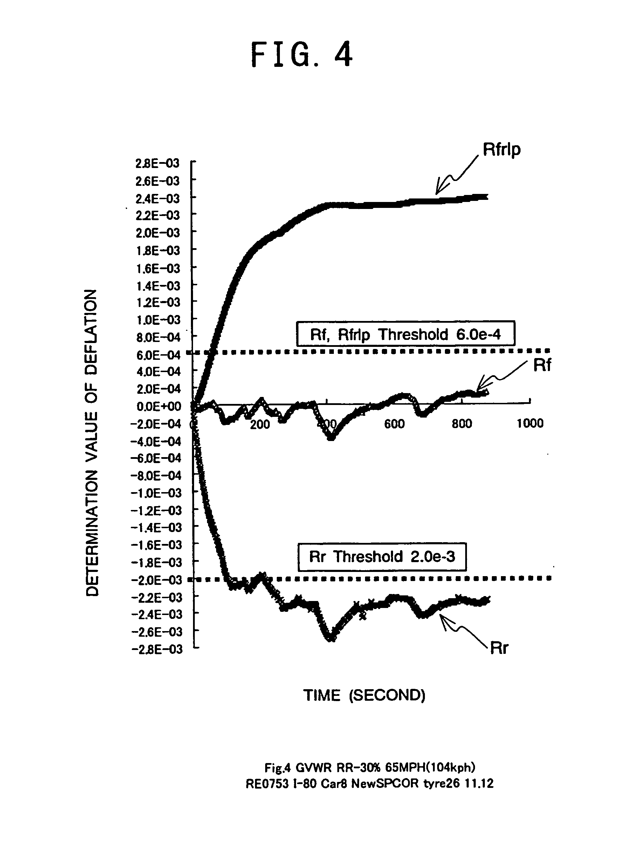

Rf, Rfrlp = $6.0 \times 10^{-4}$ (From Figs. 1 and 2, 6.0e - 4 in Figs. 1 and 2)
Rr = $2.0 \times 10^{-3}$ (From Figs. 3 and 4, 2.0e - 3 in Figs. 3 and 4)

The vehicle BUICK RENDEZVOUS CXL is front-wheel drive. Rf of the front wheel being in a deflation state is smaller at high velocity (Fig. 2) than low velocity (Fig. 1) because of an effect of centrifugal force. Accordingly, the threshold value of Rf is to be $6.0 \times 10^{-4}$ (6.0e - 4 in Figs. 1 and 2), thereby determination can be certainly made even at high velocity.

The value for determining whether a tire is deflated changes in accordance with the speed of the vehicle. Hence, it is proposed that methods for determining the decrease in tire pressure may be changed in accordance with the speed of the vehicle.

In Japanese Unexamined Patent Publication No. 337520/2002, there is described a method to modulate determination threshold values based on the position of a wheel having a possible defect after determining the wheel having a possible defect.

In Japanese Unexamined Patent Publication No. 80323/2001, there is described a method to switch threshold values depending on the vehicle speed through employing a plurality of determination threshold values in accordance with vehicle speed.

In Japanese Unexamined Patent Publication No. 6725/ 1998, it is described that determination step for low velocity is employed when the vehicle speed is lower than the threshold value, and determination step for high velocity is employed when the vehicle speed is higher than the threshold value and the vehicle is in motion.

In Japanese Unexamined Patent Publication No. 216637/ 1996, it is described that there are provided a plurality of determination means, and a warning is issued based on at least one of the plurality of determination means when the loss of air pressure is determined. The warning is issued only when the vehicle speed is higher than the threshold value and the brakes are in effect.

In Japanese Unexamined Patent Publication No. 144518/1995, there is described a method to stop the collection of data when the vehicle is in predetermined driving conditions, and narrower the range of the predetermined driving conditions being stopped for data collection in accordance with increase in the vehicle speed.

In Japanese Unexamined Patent Publication No. 40717/1995, it is described that predetermined setting for a wheel speed (average) detecting cycle at the steady driving state is modulated, and the predetermined setting for the detecting cycle is increased when the rotation of wheels is unstable than the stable state. It is also described that the threshold value for determination is increased.

However according to the prior arts, determination of tire deflation is limited within a certain speed range or driving conditions. In addition, according to the prior arts, the threshold value for determining a deflation is modulated in accordance with the vehicle speed after determining the position of a tire having a possible deflation. Accordingly, the vehicle speed in which a deflation can be determined is limited, and there is a possibility of an error in determining the position of a tire having a possible deflation.

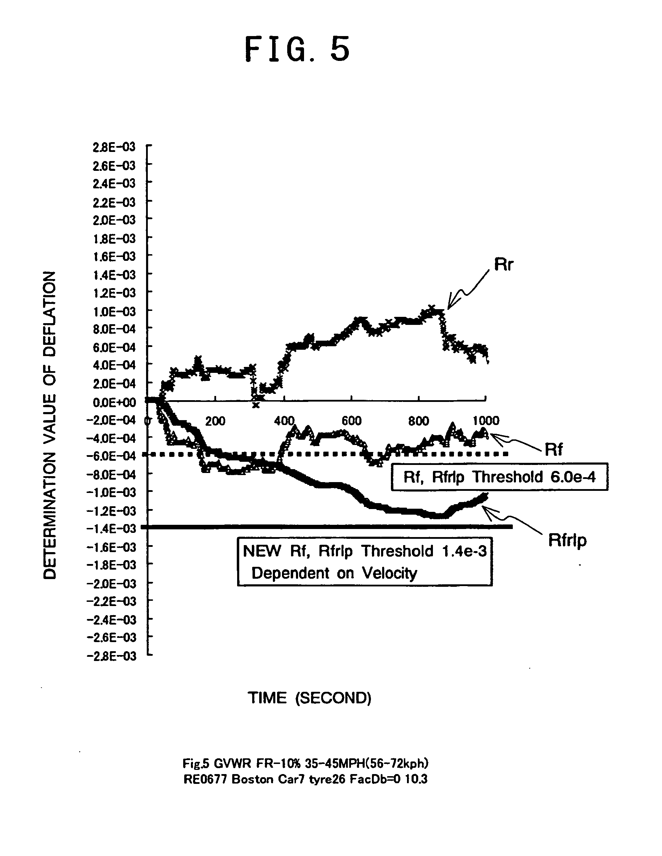

In the above-mentioned example of BUICK RENDEZVOUS CXL, since the threshold value for the front wheel of driving wheel side is set to be small, there is a possibility of issuing a false warning even if, for example, the front right tire is deflated by 10 % which is not enough to be at deflation. This is because a condition in which differences between the left and right wheels tend to be generated at times when the vehicle travels at low velocity and there are bumps and curves on the road. The requirements for a deflation of the front right tire are fulfilled thereby, the deflated tire is determined even if it is not at enough deflation and a false warning may be issued (See Fig. 5, between 200 to 400 sec. interval).

A system, a method and a program according to the pre-characterizing portion of claim 1 are known from EP-A-1 332 895, EP-A-1 352 765 and EP-A-0 832 767.

A tire deflation detection system for determining loss of air pressure in a tire through comparing a determination value, which determines the loss of air pressure in the tire based on information of wheel speed of a vehicle, with a threshold value, wherein a determination threshold value for determining a position of the tire in low air pressure is modulated in accordance with velocity of said vehicle.

Furthermore, the above-mentioned determination value for determining a position of the tire in low air pressure is wheel speed ratio of left and right wheels on a same axle.

According to the present invention, it is possible to determine the position of a deflated wheel on a vehicle with high accuracy and in a wide range of velocity through modulating determination threshold value for determining the position of a deflated tire in accordance with vehicle speed.

Fig. 1 is a graph showing an example of changes in determination value of deflated position for a vehicle driving at 56 to 72 km/h with the left front tire being deflated by 30 % with a certain load;
Fig. 2 is a graph showing an example of changes in determination value of deflated position for a vehicle driving at 104 km/h with the left front tire being deflated by 30 % with a certain load;
Fig. 3 is a graph showing an example of changes in determination value of deflated position for a vehicle driving at 56 to 72 km/h with the right rear tire being deflated by 30 % with a certain load;
Fig. 4 is a graph showing an example of changes in determination value of deflated position for a vehicle driving at 104 km/h with the right rear tire being deflated by 30 % with a certain load;
Fig. 5 is a graph showing an example of changes in determination value of deflated position for a vehicle driving at 56 to 72 km/h with the right front tire being deflated by 10 % with a certain load;
Fig. 6 is a graph showing the threshold value of Rf in Embodiments of the present invention;
Fig. 7 is a graph showing an example of changes in DEL value;
Fig. 8 is a block diagram showing an arrangement of the system for Embodiments of the present invention; and
Fig. 9 is a flow chart for determining the deflated wheel for Embodiments of the present invention.

EMBODIMENT

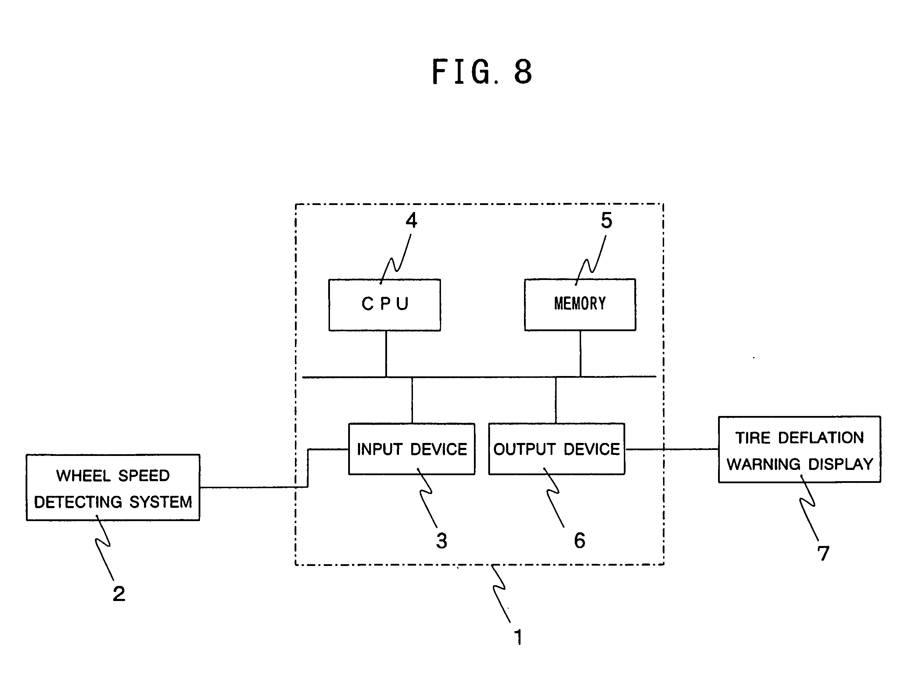

A tire deflation warning system of the present invention is explained by showing examples through employing Fig. 8.

The tire deflation warning system 1 of the present Embodiment is connected to a detection means 2 for detecting wheel speeds of respective wheels and is connected to a tire deflation warning display. The tire deflation warning system 1 includes a processing unit, a memory for storing programs and processed data, an input device for inputting wheel speeds by way of wheel speed detecting means, an output device for outputting warning to the tire deflation warning display. Other than wheel speed, speed of the vehicle may be detected and inputted. In addition, warning for tire deflation may be outputted to other vehicle controlling system.

In the present Embodiment, it is described that the program for determining tire deflation and data are stored in the same memory. However, the program for determining tire deflation may be stored in a ROM (read only memory) and data may be stored in a RAM (random access memory).

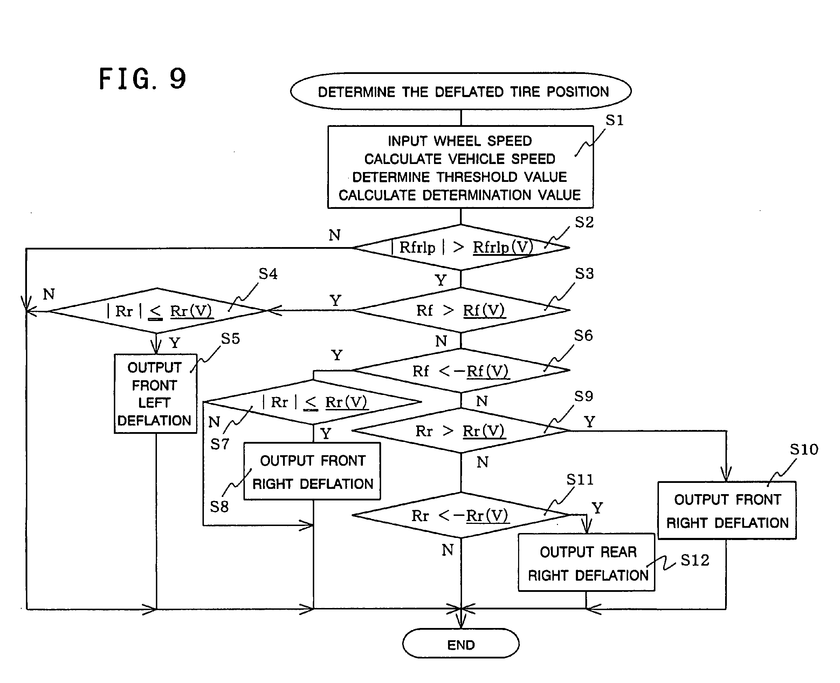

Operation will now be explained by referring to Fig. 9. In Fig. 9, threshold values are underlined. Threshold values being accompanied with (v) indicate that threshold values are modulated in accordance with velocity.

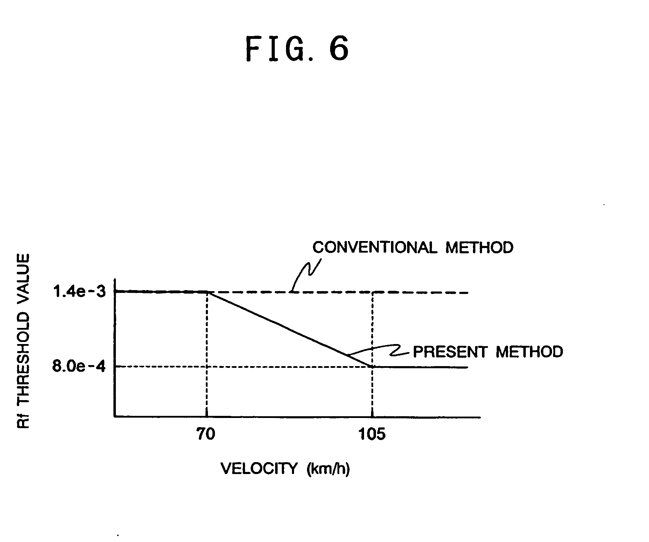

In step S1, the input device is ordered to input data, and information of wheel speed is inputted to the memory. When wheel speeds of respective wheels are inputted, the speed of the vehicle is calculated as an average wheel speed of respective wheels. The threshold values for Rf, Rr and Rfrlp are determined in accordance with the speed of the vehicle. In the present Embodiment, the threshold values are successively modulated in accordance with the speed of the vehicle as shown in the method of Fig. 6. It may be employed a method that a table having a plurality of ranges of speed is provided, and threshold values for the respective ranges are memorized and referred by the table. In addition, other than a linear expression, an approximate expression can be employed even if the threshold values are successively modulated. The threshold values can be experimentally set for respective vehicles.

From the inputted data of wheel speeds, Rf = 1 - Vfr/Vfl and Rr = 1 - Vrr/ Vrl are calculated. Then, the determined threshold values and Rf, Rr and (absolute values of) Rfrlp being calculated in advance are compared (After step S2).

It is determined that no deflation exists when the absolute value of Rfrlp is less than or equal to the determined threshold value (Step S2).

When the absolute value of Rfrlp is above the threshold value, Rf is compared with the threshold value at first. If Rf is above the threshold value and the absolute value of Rr is less than or equal to the threshold value, it is determined that the front left tire is deflated (Steps S3, S4 and S5).

When Rf is not greater than the threshold value whose sign is converted to have minus sign (that is, Rf is a negative value and its absolute value is above the threshold value) and the absolute value of Rr is less than or equal to the threshold value, it is determined that the front right tire is deflated (Steps S6, S7 and S8).

When the absolute value of Rf is less than or equal to the threshold value, Rr is compared with the threshold value. When Rr is above the threshold value, it is determined that rear left tire is deflated. (Steps S9 and S10) When Rr is below the threshold value whose sign is converted to have minus sign (that is, Rr is a negative value and its absolute value is above the threshold value), it is determined that the rear right tire is deflated (Steps S11 and S12).

The result of the determined position of the deflated wheel is stored in the memory and transmitted to the deflation warning program. In specific, a program for determining the position of deflated wheel (a subroutine or function) is called by a main program, and the result of the determination is returned as a parameter or address of the memory. Then, the deflation warning program is called by the main program.

The tire deflation warning system (DWS) does not determine to issue a warning by the values of Rfrlp, Rf and Rr, which are employed for determining the position of the deflated wheel, but determines to issue a warning by DEL value (= (Vfl + Vrr - Vfr - Vrl)/$V_{mean}$ x 50, $V_{mean}$= (Vfl + Vrr + Vfr + Vrl)/4). However, in order to accurately issue warnings, the threshold value for determining deflation for DEL value may be lowered for driving wheels when the driving wheel is deflated. In that case, the threshold value is modulated only when deflation of the driving wheel is determined through the above-mentioned algorithm for determining a position of deflation. Accordingly, the above-mentioned algorithm for determining a position of deflation does not directly issue a warning for a deflation. However, improvement in accuracy of the present algorithm contributes to the improvement in accuracy of the warning system by avoiding false warnings.

Comparative examples

The above-mentioned BUICK RENDEZVOUS CXL is employed as an example. As for a vehicle, BUICK RENDEZVOUS CXL is used and as for tires, Goodyear Fortera P225/60R17 is used. It is assumed that deflation warnings are issued in the range of velocity up to 104 km/h.

Fig. 1 shows changes of determination value of deflated position for a vehicle driving at 56 to 72 km/h with the left front tire being deflated by 30 % than normal pressure with a certain load.

Fig. 2 shows changes of determination value of deflated position for a vehicle driving at 104 km/h with the left front tire being deflated by 30 % than normal pressure with a certain load.

Fig. 3 shows changes of determination value of deflated position for a vehicle driving at 56 to 72 km/h with the right rear tire being deflated by 30 % than normal pressure with a certain load.

Fig. 4 shows changes of determination value of deflated position for a vehicle driving at 104 km/h with the right rear tire being deflated by 30 % than normal pressure with a certain load.

Fig. 5 shows changes of determination value of deflated position for a vehicle driving at 56 to 72 km/h with the right front tire being deflated by 10 % than normal pressure with a certain load. This condition is not enough to be in a deflation state.

In examples as shown in Figs. 1 to 4, the vehicle drove a straight course. In an example as shown in Fig. 5, the vehicle drove a course with bumps and curves compared with the examples as shown in Figs. 1 to 4.

In the comparative examples, the threshold values of Rf and Rfrlp were $6.0 \times 10^{-4}$ (6.0e - 4 in Fig. 1) and the threshold value of Rf was $2.0 \times 10^{-3}$ (2.0e - 3 in Fig. 1) for all above-mentioned five conditions.

On the other hand, in Embodiments of the present invention, the threshold values of Rf and Rfrlp were $1.4 \times 10^{-3}$ (1.4e - 3 in Figs. 1, 3 and 5) for Embodiments as shown in Figs. 1, 3 and 5, and the threshold value of Rr was $2.0 \times 10^{-3}$ (2.0e - 3 in Figs. 1, 3 and 5). The threshold values of Rf and Rfrlp were $6.0 \times 10^{-4}$ (6.0e - 4 in Figs. 2 and 4) for Embodiments as shown in Figs. 2 and 4, and the threshold value of Rr was $2.0 \times 10^{-3}$ (2.0e - 3 in Figs. 2 and 4).

In figures, the threshold value of the comparative examples is shown as a dashed line, Rf, Rfrlp Threshold $6.0 \times 10^{-4}$ (6.0e - 4 in Figs. 1 and 2) of Figs. 1 and 2. The threshold value of Embodiments is shown as a solid line, NEW Rf, Rfrlp Threshold $1.4 \times 10^{-3}$ (1.4e - 3 in Figs. 1, 3 and 5) of Figs. 1, 3 and 5.

When the deflation is defined by the deflation of more than 30 %, the position of the deflated wheel is determined even if the wheel is deflated by 10 % in the condition of Fig. 5 in the comparative example. However, the position of the deflated wheel is not determined in the condition of Fig. 5 of Embodiment, and the position of the deflated wheel can be accurately determined in the deflated states of Figs. 1 to 4.

Since the threshold value of the difference between front and rear wheels, Rfrlp, becomes the same value as the threshold value of driving wheel side (Rf in the present Embodiment) as a result, the threshold value of Rfrlp may be successively modulated in accordance with velocity.

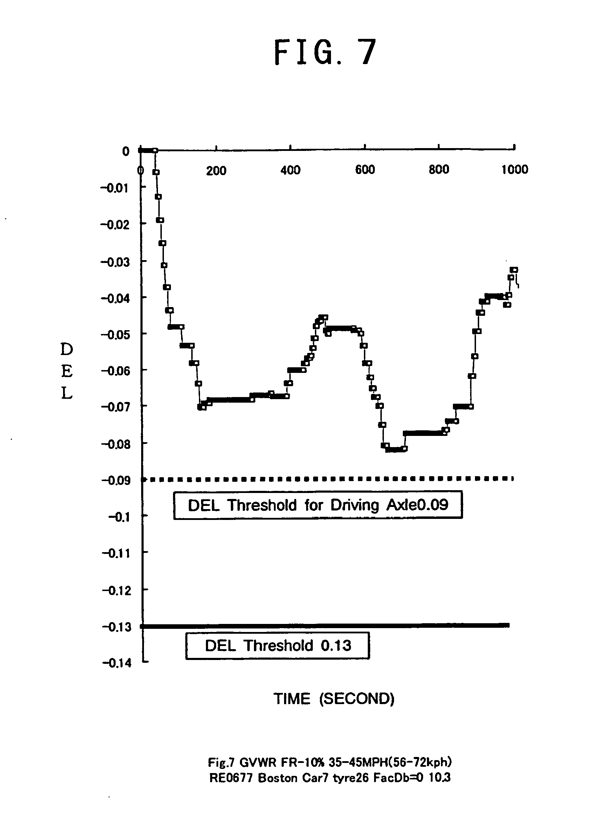

For example, the warning threshold value (absolute value) of DEL value is 0.13 (solid line) in Fig. 7. However, when there is a possible deflation of the driving wheel (when it is determined that there is a possible deflation of the driving wheel by the algorithm for determining a position of deflated wheel), the warning threshold value of DEL value is switched to 0.09 (dashed line) for the driving wheel. In the case of Fig. 7, according to the conventional system, when the right front wheel of the driving wheel is determined to be deflated, the warning threshold value of DEL value is reduced to 0.09 from 0.13 in the 200 to 400 sec. interval. Since the DEL value at the time is 0.07 and close to the threshold value, it becomes close to the issue of false warnings.

However according to Embodiment of the present invention, since threshold values of Rf and Rfrlp are enlarged in the low velocity range, false determinations in determining the position of deflation when wheels are not at enough deflation are avoided. Accordingly, there are fewer possibilities of false warnings, and the accuracy of the warning system is improved (See Figs. 1 to 5 and 7).

In the present Embodiment, it becomes possible to determine the position of the deflated wheel with high accuracy through adjustable threshold value of the front wheel being as driving wheel in accordance with velocity. In specific, the threshold value of Rf in low velocity is to be $1.4 \times 10^{-3}$ (1.4e - 3 in Fig. 1) and the threshold value of Rf in high velocity is maintained to be $6.0 \times 10^{-4}$ (6.0e - 4 in Fig. 1) through successively modulating the value in accordance with velocity as shown in Fig. 6 for example thereby, it is possible to certainly determine the position of deflated wheel within the velocity range up to 104 km/h.

In the above-mentioned manner, since threshold values for determining the position of the tire in low air pressure are modulated in accordance with velocity of the above-mentioned vehicle, it is possible to accurately determine the position of deflated wheel for substantially whole ranges of vehicle speed.

Though several Embodiments of the present invention are described above, it is to be understood that the present invention is not limited only to the above-mentioned, various changes and modifications may be made in the invention without departing from the sprit and scope thereof.

## Claims

1. A tire deflation detection system (1) for determining loss of air pressure in a tire through comparing a determination value (DEL), which determines the loss of air pressure in the tire based on information of wheel speed of a vehicle, with a threshold value, **characterized in that** a determination threshold value (Rfrlp, Rf, Rr) for determining a position of the tire in low air pressure is modulated in accordance with speed (v) of said vehicle, wherein the determination value (Rf, Rr) for determining a position of the tire in low air pressure is wheel speed ratio (Vfr/Vfl, Vrr/Vrl) of left and right wheels on a same axle.

2. A method for determining loss of air pressure in a tire through comparing a determination value (DEL), which determines the loss of air pressure in the tire based on information of wheel speed of the vehicle, with the threshold value, **characterized in that** a determination threshold value (Rfrlp, Rf, Rr) for determining a position of the tire in low air pressure is modulated in accordance with speed (v) of said vehicle, wherein the determination value (Rf, Rr) for determining a position of the tire in low air pressure is wheel speed ratio (Vfr/Vfl, Vrr/Vrl) of left and right wheels on a same axle.

3. A tire deflation detection program for determining loss of air pressure in a tire through comparing a determination value (DEL), which determines the loss of air pressure in the tire based on information of wheel speed of a vehicle, with a threshold value, **characterized in that** a determination threshold value (Rfrlp, Rf, Rr) for determining a position of the tire in low air pressure is modulated in accordance with speed (v) of said vehicle, wherein the determination value (Rf, Rr) for determining a position of the tire in low air pressure is wheel speed ratio (Vfr/Vfl, Vrr/Vrl) of left and right wheels on a same axle.

## Patentansprüche

1. Reifendruckverlust-Detektionssystem (1) zum Feststellen eines Verlustes von Luftdruck in einem Reifen durch Vergleich eines Bestimmungswertes (DEL), der den Verlust von Luftdruck in dem Reifen auf der Basis von Information von Raddrehzahl eines Fahrzeugs bestimmt, mit einem Schwellenwert, **dadurch gekennzeichnet, dass** ein Bestimmungsschwellenwert (Rfrlp, Rf, Rr) zum Bestimmen einer Position des Reifens mit niedrigem Luftdruck gemäß einer Geschwindigkeit (v) des Fahrzeugs moduliert wird, wobei der Bestimmungswert (Rf, Rr) zum Bestimmen einer Position des Reifens mit niedrigem Luftdruck ein Raddrehzahlverhältnis (Vfr/Vfl, Vrr/Vrl) von linken und rechten Rädern auf der gleichen Achse ist.

2. Verfahren zum Bestimmen eines Verlustes von Luftdruck in einem Reifen durch Vergleich eines Bestimmungswerts (DEL), der den Verlust von Luftdruck in dem Reifen auf der Basis von Information einer Raddrehzahl des Fahrzeugs bestimmt, mit einem Schwellenwert **dadurch gekennzeichnet, dass** ein Bestimmungsschwellenwert (<u>Rfrlp</u>, <u>Rf</u>, <u>Rr</u>) zum Bestimmen einer Position des Reifens mit niedrigem Luftdruck gemäß einer Geschwindigkeit (v) des Fahrzeugs moduliert wird, wobei der Bestimmungswert (Rf, Rr) zum Bestimmen einer Position des Reifens mit niedrigem Luftdruck das Raddrehzahlverhältnis (Vfr/Vfl, Vrr /Vrl) von linken und rechten Rädern auf der gleichen Achse ist.

3. Reifendruckverlust-Detektionsprogramm zum Bestimmen eines Verlustes von Luftdruck in einem Reifen durch Vergleich eines Bestimmungswertes (DEL), der den Verlust von Luftdruck in dem Reifen auf der Basis von Information einer Raddrehzahl eines Fahrzeugs bestimmt, mit einem Schwellenwert, **dadurch gekennzeichnet, dass** ein Bestimmungsschwellenwert (<u>Rfrlp</u>, <u>Rf</u>, <u>Rr</u>) zum Bestimmen einer Position des Reifens mit niedrigem Luftdruck gemäß einer Geschwindigkeit (v) des Fahrzeugs moduliert wird, wobei der Bestimmungswert (Rf, Rr) zum Bestimmen einer Position des Reifens mit niedrigem Luftdruck ein Raddrehzahlverhältnis (Vfr/Vfl, Vrr/Vrl) von linken und rechten Rädern auf der gleichen Achse ist.

**Revendications**

1. Système de détection de dégonflage d'un pneu (1) pour déterminer la perte de pression d'air dans un pneu en comparant une valeur de détermination (DEL), qui détermine la perte de pression d'air dans le pneu d'après une information de vitesse de roue d'un véhicule, avec une valeur de seuil, **caractérisé en ce qu'**une valeur de seuil de détermination (Rfrlp, Rf, Rr) pour déterminer une position du pneu à faible pression d'air est modulée selon la vitesse (v) dudit véhicule, dans lequel la valeur de détermination (Rf, Rr) pour déterminer une position du pneu à faible pression d'air est un rapport de vitesses de roue (Vfr/Vfl, Vrr/Vrl) des roues gauche et droite sur un même axe.

2. Procédé pour déterminer une perte de pression d'air dans un pneu par comparaison d'une valeur de détermination (DEL), qui détermine la perte de pression d'air dans le pneu d'après une information de vitesse de roue d'un véhicule, avec une valeur de seuil, **caractérisé en ce qu'**une valeur de seuil de détermination (Rfrlp, Rf, Rr) pour déterminer une position du pneu à faible pression d'air est modulée selon la vitesse (v) dudit véhicule, dans lequel la valeur de détermination (Rf, Rr) pour déterminer une position du pneu à faible pression d'air est un rapport de vitesses de roue (Vfr/Vfl, Vrr/Vrl) des roues gauche et droite sur un même axe.

3. Programme de détection de dégonflage de pneu pour déterminer la perte de pression d'air dans un pneu en comparant une valeur de détermination (DEL), qui détermine la perte de pression d'air dans le pneu d'après une information de vitesse de roue d'un véhicule, avec une valeur de seuil, **caractérisé en ce qu'**une valeur de seul de détermination (Rfrlp, Rf, Rr) pour déterminer une position du pneu à faible pression d'air est modulée selon la vitesse (v) dudit véhicule, dans lequel la valeur de détermination (Rf, Rr) pour déterminer une position du pneu à faible pression d'air est un rapport de vitesses de roue (Vfr/Vfl, Vrr/Vrl) des roues gauche et droite sur un même axe.

# FIG. 1

Fig.1 GVWR FL-30% 35-45MPH (56-72kph)
(RE0637 CI-M Car7 tyre26 FacDb=0 10.29)

# FIG. 2

Fig.2 GVWR FL-30% 65MPH(104kph)
RE0669 I-71 Car8 tyre26 GVWR Std 10.29

# FIG. 3

TIME (SECOND)

Fig.3 GVWR RR-30% 35-45MPH(56-72kph)
(RE0655 CI-M Car7 tyre26 FacDb=0 10.29)

# FIG. 4

Fig.4 GVWR RR-30% 65MPH(104kph)
RE0753 I-80 Car8 NewSPCOR tyre26 11.12

# FIG. 5

Fig.5 GVWR FR-10% 35-45MPH(56-72kph)
RE0677 Boston Car7 tyre26 FacDb=0 10.3

# FIG. 6

# FIG. 7

DEL Threshold for Driving Axle0.09

DEL Threshold 0.13

TIME (SECOND)

Fig.7 GVWR FR-10% 35-45MPH(56-72kph)
RE0677 Boston Car7 tyre26 FacDb=0 10.3

# FIG. 8

EP 1 582 380 B1

# FIG. 9

DETERMINE THE DEFLATED TIRE POSITION

**S1**
INPUT WHEEL SPEED
CALCULATE VEHICLE SPEED
DETERMINE THRESHOLD VALUE
CALCULATE DETERMINATION VALUE

**S2**  $| Rfrlp | > \underline{Rfrlp(V)}$  — N

Y

**S3**  $Rf > \underline{Rf(V)}$

**S4**  $| Rr | \leq \underline{Rr(V)}$  — N

Y

**S5** OUTPUT FRONT LEFT DEFLATION

**S6**  $Rf < -\underline{Rf(V)}$  — N

Y

**S7**  $| Rr | \leq \underline{Rr(V)}$  — N

Y

**S8** OUTPUT FRONT RIGHT DEFLATION

**S9**  $Rr > \underline{Rr(V)}$  — Y

N

**S10** OUTPUT FRONT RIGHT DEFLATION

**S11**  $Rr < -\underline{Rr(V)}$  — Y

N

**S12** OUTPUT REAR RIGHT DEFLATION

END

EP 1 582 380 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002337520 A
- JP 2001080323 A
- JP 10006725 A
- JP 8216637 A
- JP 7144518 A

- JP 7040717 A
- EP 1332895 A
- EP 1352765 A
- EP 0832767 A